# EUROPÄISCHE PATENTANMELDUNG

(11) **EP 1 227 050 A1**
(43) Veröffentlichungstag der Anmeldung: **31.07.2002**
(21) Anmeldenummer: 01101706.8
(22) Anmeldetag: 25.01.2001
(51) Int. Cl.: B65G 17/34

(54) **Vorrichtung zum Fördern und Sortieren von Stückgütern**

(71) Anmelder: Siemens Schweiz AG, 8047 Zürich (CH)
(72) Erfinder: Die Erfindernennung liegt noch nicht vor
(74) Vertreter: Berg, Peter

(57) **Zusammenfassung**

Für den Antrieb eines Gurtbandes (6) einer Sortiereinheit (2) in einer Vorrichtung zur Förderung und Sortierung von Stückgütern wird die lineare Bewegung der Sortiereinheiten in Fördererrichtung (4) genutzt.
Der Antrieb des Gurtbandes erfolgt über eine formschlüssige Umlenkung der translatorisch linearen Bewegung der Sortiereinheiten der Fördereinrichtung in eine rotatorische Bewegung eines mit der Sortiereinheit verbundenen Bolzenrades (14) und der Übertragung der Rotation des Bolzenrades (10) auf einen das Gurtband führenden Zylinder (32).

## Beschreibung

Die Erfindung bezieht sich auf eine Vorrichtung zum Fördern und Sortieren von Stückgütern, bei der längst einer Sortierstrecke mindestens eine Aufgabe- und/oder mindestens eine Abwurfstation angeordnet sind und bei der eine Fördereinrichtung geführt und angetrieben sowie mit aufeinanderfolgenden Sortiereinheiten ausgerüstet ist, und bei der jede Sortiereinheit ein quer zur Sortierstrecke antreibbares Gurtband aufweist.

Vorrichtungen zum Fördern und Sortieren von Stückgütern mit einer längs einer Sortierstrecke geführten Fördereinrichtung und dieser quer zur Förderrichtung laufenden hintereinander angeordneten Sortiereinheiten sind bereits allgemein bekannt. Das zu befördernde Stückgut kann von einer schräg zur Sortierstrecke befindlichen Zuführeinrichtung auf eine der vorbeigeführten Sortiereinheit bewegt werden. Dabei wird das auf der Sortiereinheit angebrachte Gurtband im Bereich der Stückgutübergabe richtungsgleich mit dem Band der Zuführeinrichtung bewegt. Bei dem Abwurf in eine Rutsche und/oder einer Übernahmestelle wird das Gurtband der Sortiereinheit quer zur Sortierstrecke in Richtung Endstelle bewegt.

Es werden heute bezüglich des Antriebs des Gurtbandes der Sortiereinheit zwei verschiedene Antriebsmechanismen unterschieden. Man findet elektromechanische und mechanische Antriebsmechanismen.

Bei den elektromechanischen Antriebsmechanismen kann die Energieübertragung berührungslos durch Induktion oder durch mechanische Elemente wie Schleifer und Schleifleitungen erfolgen. Bei den mechanischen Antriebsmechanismen wird die lineare Bewegung der Fördereinrichtung in eine Rotationsbewegung des Gurtbandes der Sortiereinheit gewandelt.

In der europäischen Patentanmeldung EP 0 930 248 A2 ist bereits die obenstehend letztgenannte Sortiereinheit mit mechanischem Antriebsmechanismus beschrieben.

Der wahlweise Antrieb der Gurtbänder der Sortiereinheiten in den Abwurfstationen erfolgt durch Kraftschluss zwischen zwei Antriebsmitteln. Im Bereich der Abwurfstationen sind jeweils erste Antriebsmittel angeordnet, die beim Passieren einer Sortiereinheit mit den an den Sortiereinheiten angebrachten zweiten Anriebsmitteln zur Zusammenwirkung bringbar sind. Die zweiten Antriebsmittel der Sortiereinheiten umfassen wenigstens ein mit dem Gurtband der betreffenden Sortiereinheit in Antriebsverbindung stehendes Reibrad. Bei den ersten Antriebsmitteln, die den Abwurfstationen der Sortierstrecke zugeordnet sind, handelt es sich um wahlweise zur reibungsschlüssigen Zusammenwirkung mit den Reibrädern der Sortiereinheiten bringbare Reibleisten, die sich in Förderrichtung erstrecken. Diese gelangen jeweils in derjenigen Abwurfstation, in der ein auf einer Sortiereinheit aufgenommenes Stückgut abgeworfen werden soll, in Kontakt mit dem Reibrad der Sortiereinheit und treiben dadurch das Reibrad beim Passieren der Abwurfstation drehend an. Auf diese Weise wird die Drehbewegung des Reibrades auf das Gurtband übertragen. Es muss genügend Energie für das Überwinden der Massenträgheit bei der Beschleunigung des Stückgutes zur Verfügung gestellt werden. Der Kontakt zwischen ersten und zweiten Antriebselement wird daher unter grossen Kraftaufwand betrieben.

Die vorbekannte Sortiereinheit hat sich bezüglich eines kostengünstigen und einfachen Aufbaus bewährt, erscheint aber im Hinblick auf folgende Punkte verbesserungsbedürftig:
a) ungewollte Wandlung von mechanischer Energie in Wärmeenergie, welche sich negativ auf die Materialeigenschaften des Antriebsmittelpaares auswirkt;
b) bedingter Verschleiss von Reibräder und Reibleisten;
c) starke Beanspruchung und Verschleiss der übrigen mechanischen Komponenten aufgrund des sehr grossen Kraftaufwandes zur Erzeugung der reibschlüssigen Verbindung;
d) stetig abnehmbarer Reibkoeffizient bedingt durch Schmutz, Umwelteinflüsse und Verschleisspartikel; und
e) sehr schwere Stückgüter können nicht zuverlässig beschleunigt und /oder definiert verzögert und zur Abwurfstation bewegt werden, da zur Überwindung der Masseträgheitsmomente die maximal zu erzeugenden Reibkräfte des Antriebmittelpaares begrenzt sind. Das Beschleunigungs- und/oder Verzögerungsverhalten von Stückgütern kann somit nicht gesteuert kalkulierbar ablaufen.

Die der Erfindung zugrundeliegenden Aufgabe besteht daher, ausgehend von dem vorerwähnten Stande der Technik, in der Verbesserung des mechanischen Antriebsmechanismus des Gurtbandes der Sortiereinheit, und zwar gleichermassen hinsichtlich eines energiegünstigeren, verschleissarmen Antriebsmechanismus und der definierten Bewegung eines höheren Stückgutgewichtes.

Diese Aufgabe wird bei einer Vorrichtung zum Fördern und Sortieren von Stückgütern der eingangs genannten Art erfindungsgemäss dadurch gelöst, dass für den wahlweisen Antrieb der Gurtbänder der Sortiereinheiten in den Abwurfstationen eine formschlüssige Umlenkung der translatorisch linearen Bewegung der Fördereinrichtung in eine rotatorische Bewegung genutzt wird.
Zur Erzeugung der formschlüssigen Umlenkung wird in einer Ausführungsform der vorliegenden Erfindung ein rotierbar gelagertes Bolzenrad mit festsitzenden Bolzen und eine in Eingriff bringbare Kulisse verwendet.

Die Kulisse besitzt mehrere kurvenartige nacheinander angeordnete Führungsbahnen, die je nach geforderter Bewegung des Gurtbandes links und/oder rechts orientiert sind. Die Führungsbahnen können als in der Kulissenoberfläche verlaufende Nuten oder als aus der Kulissenoberfläche herausragende Stege ausgeführt sein. Sind die Führungsbahnen als in der Kulissenoberfläche verlaufende Nuten ausgeführt, greift ein Bolzen des Bolzenrades nach Zuschaltung der Kulisse in die erste Führungsbahn ein. Die Bewegung des Bolzens in der kurvenförmig ausgeführten Nut bedingt eine Drehung des Bolzenrades. Am Ende der Führungsbahn fährt der Bolzen aus der Nut heraus. Durch die Drehung des Bolzenrades folgt der nächste Bolzen und greift in die um den Abstand zweier Bolzen versetzte nachfolgende Führungsbahn ein.
Die Führungsbahnen können aber auch als aus der Kulissenoberfläche herausragende Stege ausgeführt sein. In dieser Ausführungsform kommen jeweils zwei benachbarte Bolzen des Bolzenrades mit einem Steg der Kulisse in Eingriff und sind somit führbar.

Zur Gewährleistung des erforderlichen Gurtbandvorschubes benötigt die Kulisse eine bestimmte Länge, die die Breite einer Sortiereinheit überschreiten kann. Wird nun für eine bestimmte Sortiereinheit die Kulisse zugeschaltet, wird somit auch eine der bestimmten Sortiereinheit nachgeschaltete Sortiereinheit im Bereich der Zielstellen mit aktiviert werden. Zur gezielten Ansteuerung jeder einzelnen Sortiereinheit wird die Kulisse vorteilhaft in mehrere Teile aufgeteilt, die separat angesteuert werden können. Mit dieser Aufteilung ist gewährleistet, dass die der zu aktivierenden Sortiereinheit nachfolgende Sortiereinheit nicht aktiviert wird.

Zur gezielten und geräuscharmen Einführung der Bolzen des Bolzenrades in die Führungsbahnen der Kulisse ist am Anfang der jeweiligen Führungsbahn eine Einführhilfe vorgesehen.

Ist eine Rechts/Links Bewegung des Gurtbandes der Sortiereinheit vorgesehen, besitzt die Kulisse zwei Teile, einen zuschaltbaren ersten Teil mit rechts verlaufenden Führungsbahnen und einen zuschaltbaren zweiten Teil mit links verlaufenden Führungsbahnen, die jeweils in Eingriff mit den Bolzen des Bolzenrades bringbar sind.

Das Bolzenrad wird auf der Sortiereinheit mitgeführt. Die Kulisse mit den Führungsbahnen ist relativ hierzu ortsfest angeordnet.
Eine wahlweise Rechts/Links Bewegung des Gurtbandes der Sortiereinheit wird dadurch erzielt, dass die Kulisseteile mit den in Bezug auf die Fahrtrichtung der Fördereinrichtung links und/oder rechts verlaufenden Führungsbahnen stationär in bezug zum Bolzenrad montiert sind und in Abhängigkeit eines Steuersignals in und/oder ausser Eingriff mit den Bolzen des Bolzenrades gestellt werden.
Das Bolzenrad ist drehbar auf einem Tragrohr gelagert, welches mit dem Fahrwerk der Fördereinrichtung verbunden ist. Das Bolzenrad ist fest mit einer ersten Riemenscheibe verbunden, die wiederum mittels Riemenübertrieb eine zweite Riemenscheibe antreibt, die fest an einem Führungszylinder für das Gurtband der Sortiereinheit montiert ist.
Die rotierende Bewegung des Bolzenrades wird also mittels Riemen auf den Führungszylinder des Gurtbandes übertragen.

Wird nun je nach beabsichtigter Drehrichtung des Gurtbandes der Sortiereinheit der in Förderrichtung erste Teil der Kulisse mit linken oder der zweite Teil der Kulisse mit rechten Führungsbahnen in Eingriffsposition gestellt, greift der erste Bolzen des Bolzenrades in die Führungsnut (bei einer Nutkulisse) oder das erste Bolzenpaar in den Führungssteg (bei einer Stegkulisse) ein und bedingt eine Drehung des Bolzenrades. Dadurch folgt der nächste Bolzen nach und greift in die nächste Führungsbahn ein. Die Länge der kurvenförmigen Führungsbahnen wird vorteilhaft so gewählt, dass ein nahtloser Übergang von einem Bolzen zum nächsten erfolgt.

Der für die Anwendung der Sortiereinheit entsprechende Vorschub des Gurtbandes lässt sich über die Dimensionierung des Durchmessers der Riemenscheiben und der Länge der Kulisse einstellen.

Durch die Variation der Kurvenformen der Führungsbahnen lassen sich unterschiedliche Bewegungsprofile des Gurtbandvorschubes erzielen.

Die Bewegung des Gurtbandes kann beispielsweise in drei verschiedene Bewegungsabläufe unterteilt werden.
Die Kurvenverläufe der Führungsbahnen sind in dieser Ausführungsvariante vorzugsweise konstruktiv so ausgelegt, dass im ersten Abschnitt der Gurtbandbewegung das Gurtband beschleunigt, im zweiten Abschnitt mit konstanter Geschwindigkeit bewegt und im dritten Abschnitt verzögert wird. Damit ist eine präzise Aufnahme und Abgabe der Stückgüter in die Auffangstationen gewährleistet.

Zwei weitere konstruktive Möglichkeit zur Erzeugung der formschlüssigen Umlenkung bestehen zum einen in einer Kombination eines schwenkbar, rotierbar gelagerten Bolzenrades mit festsitzenden Bolzen und einer fest stehenden Kulisse und zum anderen in einer Kombination eines rotierbar gelagerten Bolzenrades mit beweglich zuschaltbaren Bolzen und einer fest stehenden Kulisse.
In beiden Ausführungsformen ist die Kulisse feststehend und das gesamte Bolzenrad oder die einzelnen Bolzen werden zum Eingriff der Bolzen mit den Führungsbahnen bewegt.

Mit den vorgenannten Ausführungsformen ist es möglich, das Gurtband der Sortiereinheit mit einem geringeren Energieaufwand, gesteuert beschleunigt und / oder gleichförmig und/oder gesteuert verzögert anzutreiben.

Gleichzeitig verringert sich der Verschleiss der mechanischen Komponenten, was zu einer höheren Lebensdauer der Sortiereinheit führt.

Die Erfindung wird nachfolgend anhand einer zeichnung beispielsweise näher erläutert. Dabei zeigen:
- Figur 1: Ansicht der erfindungsgemässen Vorrichtung in der Kombination eines rotierbar gelagerten Bolzenrades mit festsitzenden Bolzen und beweglicher Kulisse
- Figur 2: Ansicht eines Bolzenrades und einer Kulisse vor Eingriff eines Bolzens in eine Führungsbahn der Kulisse
- Figur 3: Ansicht der erfindungsgemässen Vorrichtung in der Kombination eines rotierbar gelagerten Bolzenrades mit beweglich zuschaltbaren Bolzen und einer fest stehenden Kulisse
- Figur 4: Ansicht der erfindungsgemässen Vorrichtung in der Kombination eines schwenkbar, rotierbar gelagerten Bolzenrades mit festsitzenden Bolzen und einer fest stehenden Kulisse

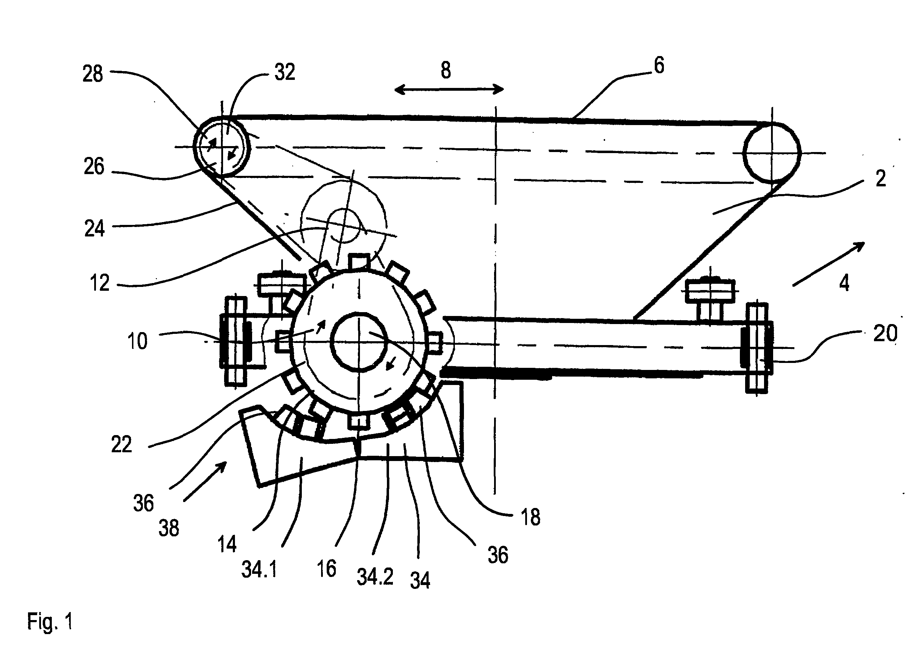

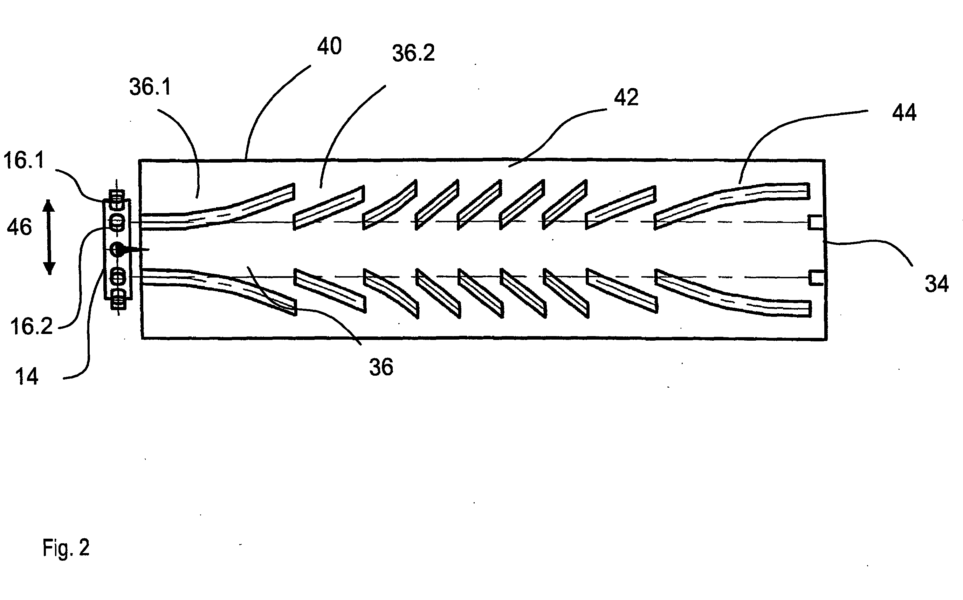

Figur 1 zeigt in schematischer Darstellung eine Sortiereinheit 2 einer Fördereinrichtung in der seitlichen Perspektive.
Die Sortiereinheit 2 ist in einer Fördereinrichtung mit weiteren Sortiereinheiten zu einer geschlossenen Kette verbunden. Die Sortiereinheiten 2 werden durch einen hier nicht weiter dargestellten Antrieb in Förderrichtung 4 bewegt. Diese Bewegung in Förderrichtung 4 wird für den wahlweisen Antrieb eines Gurtbandes 6 der Sortiereinheit 2 genutzt. Eine Bewegung 8 des Gurtbandes 6 der Sortiereinheit 2 verläuft quer zur Förderrichtung 4 der hintereinander geschalteten Sortiereinheiten der Fördereinrichtung.
Im vorliegenden Ausführungsbeispiel ist es vorgesehen, dass zur Erzeugung der formschlüssigen Umlenkung (also zur Umwandlung der translatorisch linearen Bewegung in Förderrichtung 4 der Fördereinrichtung in eine rotatorische Bewegung 10 eines Bolzenrades 14 ein rotierbar gelagertes Bolzenrad 14 mit festsitzenden Bolzen 16 und einer zuschaltbaren Kulisse 34 mit kurvenförmigen Führungsbahnen 36 verwendet wird.
In der in Figur 1 dargestellten Ausführungsvariante sind die Führungsbahnen 36 als aus der Kulissenoberfläche herausragende Führungsbahnen beschaffen (Stege). Sie können aber auch wie in einer anderen in Figur 2 gezeigten Ausführungsvariante als in der Kulissenoberfläche verlaufende Nuten beschaffen sein.

Zur Erzielung der Rechts/Links-Bewegung 8 des Gurtbandes 6, sieht die in Figur 1 dargestellte Ausführungsvariante zwei bewegliche Kulissenteile 34.1, 34.2 vor, bei der ein erstes Kulissenteil 34.1 rechts verlaufende kurvenförmige Führungsbahnen 36 und ein zweites Kulissenteil 34.2 links verlaufende kurvenförmige Führungsbahnen 36 aufweist.

In der in Figur 1 dargestellten Ausführungsvariante greift ein Bolzenpaar des Bolzenrades 14 in eine stegförmige Führungsbahn 36 eines zugeschalteten Kulissenteils 34.2 ein und ist nach Eingriff führbar.
Zum sicheren und geräuscharmen Einführen eines Bolzen 16 des Bolzenrades 14 in eine Führungsbahn 36 eines zugeschalteten Kulissenteiles 34.1, 34.2 ist eine Einführhilfe vorgesehen.

Wie aus der Figur 1 ersichtlich ist, besteht eine ortsfeste Verbindung des Bolzenrades 14 und der Sortiereinheit 2. Das Bolzenrad 14 wird daher mit der Sortiereinheit 2 bewegt. Die beiden Kulissenteile mit rechts verlaufenden kurvenförmigen Führungsbahnen 34.1 bzw. mit links verlaufenden kurvenförmigen Führungsbahnen sind dahingegen stationär montiert. Die beiden Kulissenteile 34.1, 34.2 sind in der axialen Lage des Bolzenrades 14 unterhalb der Sortiereinheit 2 an den jeweiligen Aufgabe und Abwurfstellen montiert.

Das Bolzenrad 14 ist drehbar auf einem Tragrohr 18 gelagert, welches wiederum mit einem Fahrwerk 20 der Fördereinrichtung verbunden ist. An dem Bolzenrad 14 ist fest eine Riemenscheibe 22 montiert, die mittels einem Riemenübertrieb 12 eine weitere Riemenscheibe 26 antreibt, die ihrerseits fest an einem Führungszylinder 32 des Gurtbandes 6 montiert ist. Dadurch kommt es zur Bewegungsübertragung der Drehbewegung 10 des Bolzenrades 14 auf die Drehbewegung 28 des Gurtbandführungszylinders 32 und damit zur Bewegung 8 des Gurtbandes 6.

Je nach beabsichtigter Drehrichtung 8 des Gurtbandes 6 der Sortiereinheit 2 wird in Abhängigkeit eines Steuersignales entsprechend das in Bewegungsrichtung der Fördereinrichtung 4 rechte oder linke Kulissenteil 34.1, 34.2 mit den jeweiligen rechts bzw. links verlaufenden kurvenförmigen Führungsbahnen 36 in Eingriff gestellt. Diese Bewegung ist in der Figur 1 anhand von Pfeil 38 dargestellt.

Der Eingriff der Bolzen 16 des Bolzenrades 14 ist anhand von der in Figur 2 dargestellten Ausführungsvariante dargestellt. Ein Bolzen 16.1 des Bolzenrades 14 wird in eine erste kurvenförmige Führungsbahn 36.1 eingesteuert und bewirkt eine Drehung des Bolzenrades 14. Dadurch folgt ein nächster Bolzen 16.2 nach und greift in eine nächste kurvenförmige Führungsbahn 36.2 ein. Bei einer fortlaufenden linearen Bewegung in Förderrichtung 4 der Fördereinrichtung bewirkt dies eine stückweise Rotation des Bolzenrades 14.
Diese Rotation 10 wird entsprechend der Übersetzung in eine Drehung des Gurtbandes 6 der Sortiereinheit 2 umgesetzt.

Die Figur 2 zeigt weiterhin eine besonders vorteilhafte Ausgestaltung der kurvenförmigen Führungsbahnen 36 einer Kulisse 34 für die Bewegung 8 des Gurtbandes 6 der Sortiereinheit 2 in der Gestalt, dass sie an ihrem Anfang 40 und/oder an ihrem Ende 44 eine geringere Steigung aufweisen als in ihrem mittleren Bereich 42.

Durch die unterschiedlichen Steigungen der Kurven der einzelnen Führungsbahnen 36 kann die Bewegung 10 des Bolzenrades 14 und damit des Gurtbandes 6 der Sortiereinheit 2 beschleunigt, mit konstanter Geschwindigkeit oder verzögert erfolgen. Es lassen sich damit verschiedene Geschwindigkeitsprofile des Gurtbandes 8 der Sortiereinheit 2 realisieren.

Der in Figur 2 dargestellte Kurvenverlauf der Führungsbahnen 36 kann entsprechend der erforderlichen Bewegung 8 des Gurtbandes 6 flach oder steiler ausgeführt sein.
Zum Abwurf der Stückgüter in die einzelnen Abwurfstationen ist es notwendig, dass sich das Gurtband 6 der Sortiereinheit 2 entsprechend mit dem der jeweiligen Anwendung erforderlichen Gurtbandvorschubes bewegt. Dazu wird der Durchmesser der beiden Riemenscheiben 22 und 26 so dimensioniert, dass der notwendigen Vorschub des Gurtbandes 6 der Sortiereinheit 2 gewährleistet ist. Somit wird eine präzise Aufnahme der Stückgüter auf die Fördereinrichtung und Abgabe der Stückgüter in die Auffangstationen realisiert.

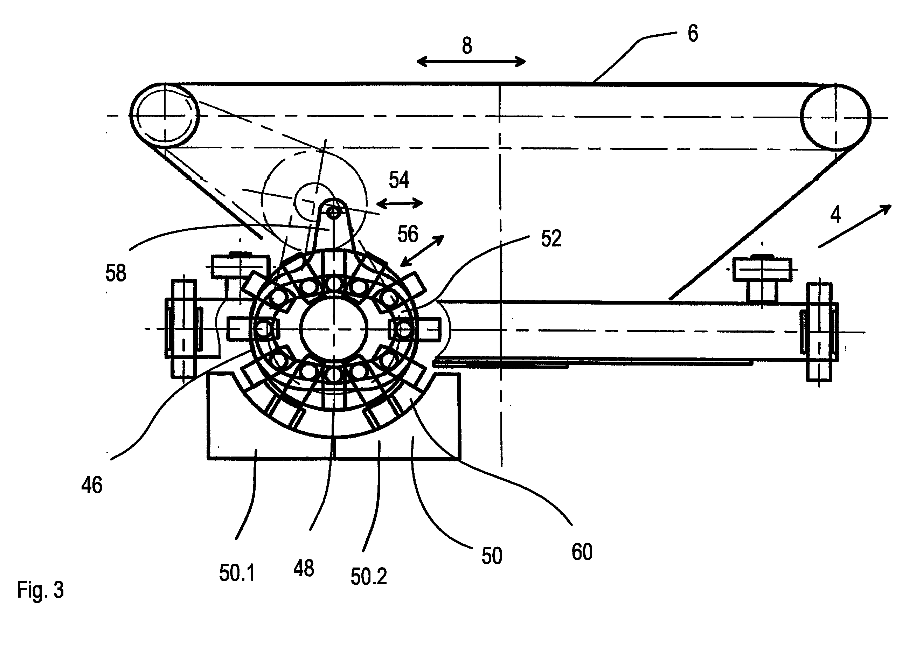

In Figur 3 ist eine weitere konstruktive Möglichkeit zur Erzeugung der formschlüssigen Umlenkung dargestellt. Figur 3 zeigt in schematischer Darstellung eine Sortiereinheit 2 einer Fördereinrichtung in der seitlichen Perspektive in einer Kombination eines rotierbar gelagerten Bolzenrades 46 mit beweglich zuschaltbaren Bolzen 48 und einer fest stehenden Kulisse 50. In dieser Ausführungsform ist die Kulisse 50 feststehend und die einzelnen Bolzen 48 werden zum Eingriff mit den Führungsbahnen 60 der Kulisse 50 bewegt. Die Bolzen 48 des Bolzenrades 46 sind beweglich um ein über einen Hebel 58 verstellbares Oval 52 angeordnet und befinden sich in Abhängigkeit von der Stellung des Ovals 52 in oder ausserhalb des Bolzenrades 46. Die Bolzen 48 bewegen sich um das verstellbare Oval 52. Dadurch ändern sie ihre Position 56 in dem Bolzenrad 46 derart, dass sie gänzlich in diesem verschwinden oder aber aus ihm herausragen. Über einen Hebel 58 kann das Oval 52 so verdreht werden, dass die herausragenden Bolzen 48 sich im - oder ausserhalb des Eingriffbereiches der Bolzen 48 mit den rechts oder links gerichteten Führungsbahnen der Kulissenteile 50.1 bzw. 50.2 befinden.
Soll eine bestimmte Sortiereinheit 2 an einer Aufnahme- oder Abgabestelle aktiv werden, werden je nach beabsichtigter Drehrichtung 8 des Gurtbandes 6 der Sortiereinheit 2 die in Fahrtrichtung 4 der Fördereinheit linken oder rechten Bolzen 48 des Bolzenrades 46 mittels Drehung des Ovals 54 aktiviert. Die aktivierten Bolzen 48 des Bolzenrades 46 kommen dadurch beim Erreichen der Kulisse 50 in Eingriffsposition. Ein erster Bolzen (beim Einsatz einer Nutkulisse) oder ein erstes Bolzenpaar (beim Einsatz einer Stegkulisse) des Bolzenrades 46 wird in eine erste Führungsbahn eingesteuert und bedingt eine Drehung des Bolzenrades 46. Dadurch folgt ein nächster Bolzen und greift in eine nächste Führungsbahn ein. Vorteilhaft lässt sich die Länge der Führungsbahnen 60 so wählen, dass ein nahtloser Übergang von einem Bolzen 48 zum nächsten erfolgt.

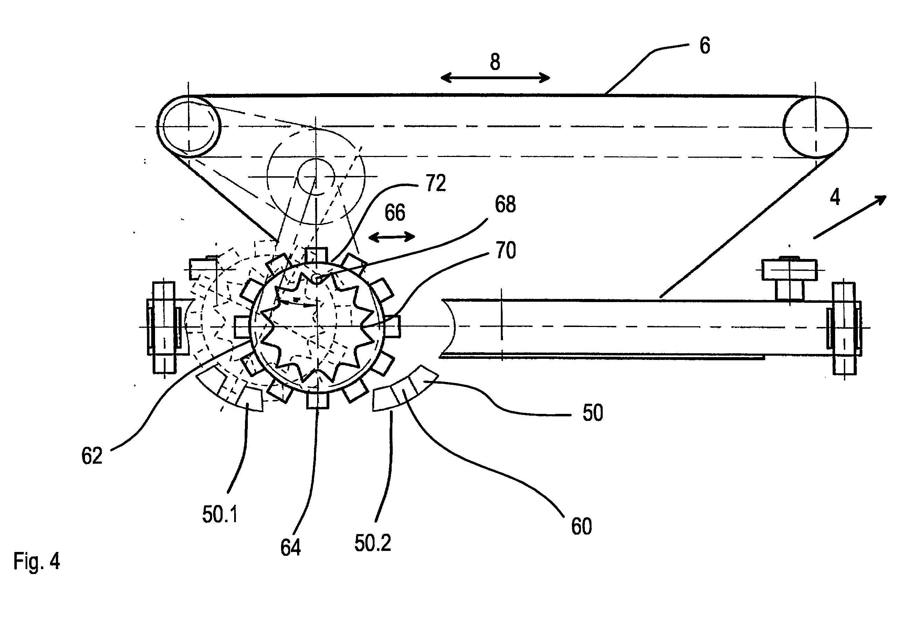

In Figur 4 ist eine andere konstruktive Möglichkeit zur Erzeugung der formschlüssigen Umlenkung dargestellt. Figur 4 zeigt in schematischer Darstellung eine Sortiereinheit 2 einer Fördereinrichtung in der seitlichen Perspektive in einer Kombination eines schwenkbar, rotierbar gelagerten Bolzenrades 62 mit festsitzenden Bolzen 64 und einer fest stehenden Kulisse 50.
In dieser Ausführungsformen ist die Kulisse 50 feststehend und das Bolzenrad 62 wird zum Eingriff der Bolzen 64 mit der Führungsbahnen 60 bewegt. Das Bolzenrad 62 ist schwenkbar montiert und je nach beabsichtigter Drehrichtung des Gurtbandes 6 in Abhängigkeit eines Steuersignals in und/oder ausser Eingriff 66 mit den Kulissenteilen 50.1, 50.2 bringbar.

Das Bolzenrad 62 besitzt einen zackenförmigen Ring 70 an dessen oberen Teil sich ein Fixierungsstift 68 befindet. Dieser Fixierungsstift 68 dient zur Wiederherstellung der Ruheposition 72 des Bolzenrades 62 nach erfolgtem Schwenk 66 des Bolzenrades 62 und damit nach Eingriff der Bolzen 64 mit einem der Kulissenteile 50.1 bzw. 50.2. Damit wird ein definierter Anfangszustand 72 des Bolzenrades 62 gewährleistet.

Der Fixierungsstift 68 dient gleichzeitig zur Fixierung des Gurtbandes 6 der Sortiereinheit 2 bei Kurvenfahrten innerhalb der Fördereinrichtung.

### Liste der verwendeten Bezugszeichen

- 2: Sortiereinheit
- 4: Bewegungsverlauf in Förderrichtung (translatorisch lineare Bewegung der Fördereinrichtung)
- 6: Gurtband
- 8: Rechts/Linksbewegung des Gurtbandes der Sortiereinheit
- 10: Rotatorische Bewegung des Bolzenrades (Rechts-/Linkslauf)
- 12: Riemenübertrieb
- 14: rotierbar gelagerten Bolzenrad mit festsitzenden Bolzen
- 16: festsitzende Bolzen
- 18: Tragrohr
- 20: Fahrwerk der Fördereinrichtung
- 22: Erste Riemenscheibe
- 24: Riemen
- 26: Zweite Riemenscheibe
- 28: Bewegung des Gurtbandführungszylinders
- 32: Gurtbandführungszylinder
- 34: bewegliche Kulisse
- 34.1: bewegliches Kulissenteil mit rechtverlaufenden Führungsbahnen
- 34.2: bewegliches Kulissenteil mit linksverlaufenden Führungsbahnen
- 36: Führungsbahn
- 38: Schwenkbewegung eines Kulissenteils
- 40: fordere Führungsbahnen (in Bewegungsrichtung der Fördereinrichtung)
- 42: mittlere Führungsbahnen (in Bewegungsrichtung der Fördereinrichtung)
- 44: hintere Führungsbahnen (in Bewegungsrichtung der Fördereinrichtung)
- 46: rotierbar gelagertes Bolzenrad mit beweglichen Bolzen
- 48: bewegliche Bolzen
- 50: fest stehende Kulisse
- 50.1: fest stehendes Kulissenteil mit rechtverlaufenden Führungsbahnen
- 50.2: fest stehendes Kulissenteil mit linksverlaufenden Führungsbahnen
- 52: verstellbares Oval
- 54: Bewegung des Ovals
- 56: Bewegung der Bolzen
- 58: Hebel
- 60: Führungsbahn
- 62: schwenkbar, rotierbar gelagerten Bolzenrad mit festsitzenden Bolzen
- 64: festsitzende Bolzen
- 66: Schwenkung des Bolzenrades
- 68: Fixierungsstift
- 70: zackenförmiger Ring
- 72: Ruheposition des Bolzenrades

## Patentansprüche

1. Vorrichtung zum Fördern und Sortieren von Stückgütern, bei der längst einer Sortierstrecke mindestens eine Aufgabe- und/oder mindestens eine Abwurfstation angeordnet sind und bei der eine Fördereinrichtung geführt und angetrieben sowie mit aufeinanderfolgenden Sortiereinheiten (2) ausgerüstet ist, und bei der jede Sortiereinheit (2) ein quer zur Sortierstrecke antreibbares Gurtband (6) aufweist
**dadurch gekennzeichnet, dass**
für den Antrieb des Gurtbandes (6) eine formschlüssige Umlenkung der translatorisch linearen Bewegung (4) der Fördereinrichtung in eine rotatorische Bewegung (10) genutzt wird.

2. Vorrichtung nach Anspruch 1,
**dadurch gekennzeichnet, dass**
zur Erzeugung der formschlüssigen Umlenkung ein rotierbar gelagertes Bolzenrad (14) mit fest sitzenden Bolzen (16) und einer beweglichen zuschaltbaren Kulisse (34) vorgesehen sind.

3. Vorrichtung nach Anspruch 2,
**dadurch gekennzeichnet, dass**
die beweglich zuschaltbare Kulisse (34) in einen ersten beweglich zuschaltbaren Kulissenteil (31.1) und in einen zweiten beweglich zuschaltbaren Kulissenteil (31.2) unterteilt ist.

4. Vorrichtung nach einem der Ansprüche 2 und 3,
**dadurch gekennzeichnet, dass**
die bewegliche zuschaltbare Kulisse (34) in Förderrichtung 4 der Fördereinheit mehrfach unterteilt und jeweils einzeln zuschaltbar ist.

5. Vorrichtung nach Anspruch 1,
**dadurch gekennzeichnet, dass**
zur Erzeugung der formschlüssigen Umlenkung ein rotierbar gelagertes Bolzenrad (46) mit beweglichen zuschaltbaren Bolzen (48) und einer fest stehenden Kulisse (50) vorgesehen sind.

6. Vorrichtung nach Anspruch 5,
**dadurch gekennzeichnet, dass**
die Bolzen (48) des Bolzenrades (46) um ein verstellbares Oval (52) beweglich angeordnet sind und abhängig von der Stellung (54) des Ovals (52) sich in oder ausserhalb des Bolzenrades (46) befinden.

7. Vorrichtung nach Anspruch 6,
**dadurch gekennzeichnet, dass**
die Bolzen (48) des Bolzenrades (46) sich durch Verstellung (54) des Ovals (52) in oder aus den Eingriffsbereich der Kulisse (50) bewegen lassen.

8. Vorrichtung nach Anspruch 1,
**dadurch gekennzeichnet, dass**
zur Erzeugung der formschlüssigen Umlenkung ein schwenkbar, rotierbar gelagertes Bolzenrad (62) und eine fest stehenden Kulisse (50) vorgesehen sind.

9. Vorrichtung nach Anspruch 8,
**dadurch gekennzeichnet, dass**
das Bolzenrad (62) einen zackenförmigen Ring (70) besitzt, an dessen oberen Teil sich ein Fixierungsstift (68) befindet.

10. Vorrichtung nach einem der Ansprüche 5 und 8,
**dadurch gekennzeichnet, dass**
die feststehende Kulisse (50) in einen feststehenden ersten Kulissenteil (50.1) und in einen feststehenden zweiten Kulissenteil (50.2) unterteilt ist.

11. Vorrichtung nach einem der Ansprüche 2 bis 10,
**dadurch gekennzeichnet, dass**
die beiden Kulissenteile (34.1, 34.2 bzw. 50.1, 50.2) mehrere linke oder rechte kurvenartige Führungsbahnen besitzen, die als in der Kulissenoberfläche verlaufende Nuten oder als aus der Kulissenoberfläche herausragende Stege ausgeführt sind.

12. Vorrichtung nach Anspruch 11,
**dadurch gekennzeichnet, dass**
die in Bewegungsrichtung 4 der Fördereinrichtung forderen (40) und hinteren (44) angeordneten Führungsbahnen eine geringere Steigung aufweisen als die mittleren Führungsbahnen (42).

13. Vorrichtung nach einem der Ansprüche 2 bis 12,
**dadurch gekennzeichnet, dass**
jeweils zwei benachbarte Bolzen des Bolzenrades (14, 46, 60) mit einem Steg eines Kulissenteils (34.1, 34.2 bzw. 50.1, 50.2) bzw. ein Bolzen des Bolzenrades (14, 46, 60) mit einer Nut eines Kulissenteils (34.1, 34.2 bzw. 50.1, 50.2) zum Eingriff kommt und damit führbar sind bzw. ist.

14. Vorrichtung nach einem der Ansprüche 2 bis 4 und 11 bis 13,
**dadurch gekennzeichnet, dass**
je nach beabsichtigter Bewegungsrichtung (8) des Gurtbandes (6) das Kulissenteil mit den rechten (34.1) oder das Kulissenteil mit den linken Führungsbahnen (34.2) in Abhängigkeit eines Steuersignals mit den Bolzen (16) des Bolzenrades (14) in und/oder ausser Eingriff bringbar ist.

15. Vorrichtung nach einem der Ansprüche 5 bis 7 und 10 bis 13,
**dadurch gekennzeichnet, dass**
je nach beabsichtigter Bewegungsrichtung (8) des Gurtbandes (6) in Abhängigkeit eines Steuersignals durch Bewegung (54) des Hebels (58) die in Fahrtrichtung rechten oder linken Bolzen (48) des Bolzenrades (46) mit den rechten bzw. linken Führungsbahnen der Kulissenteile (50.1, 50.2) in und/oder ausser Eingriff bringbar sind.

16. Vorrichtung nach einem der Ansprüche 8 bis 13,
**dadurch gekennzeichnet, dass**
das Bolzenrad (62) schwenkbar (66) montiert ist und je nach beabsichtigter Bewegungsrichtung (8) des Gurtbandes (6) in Abhängigkeit eines Steuersignals die Bolzen (64) des Bolzenrades (62) in und/oder ausser Eingriff mit den Führungsbahnen der Kulisse (50) bringbar sind.

17. Vorrichtung nach einem der Ansprüche 2 bis 16,
**dadurch gekennzeichnet, dass**
das Bolzenrad (14, 46, 60) auf der Sortiereinheit (2) mitgeführt ist und das die Kulisse (34, 50) relativ hierzu ortsfest angeordnet ist.

18. Vorrichtung nach einem der Ansprüche 2 bis 17,
**dadurch gekennzeichnet, dass**
des Bolzenrad (14, 46, 60) drehbar auf einem Tragrohr (18) gelagert ist.

19. Vorrichtung nach einem der Ansprüche 2 bis 18,
**dadurch gekennzeichnet, dass**
das Bolzenrad (14, 46, 60) fest mit einer ersten Riemenscheibe (22) verbunden ist, die wiederum mittels Riemenübertrieb (12) eine zweite Riemenscheibe (26) antreibt, die fest an einem Führungszylinder (32) für das Gurtband (6) montiert ist.

20. Vorrichtung nach einem der Ansprüche 2 bis 16,
**dadurch gekennzeichnet, dass**
am Anfang einer Führungsbahn der Kulisseteile eine Einführhilfe für einen Bolzen des Bolzenrades vorgesehen ist.
